Europäisches Patentamt

European Patent Office

Office européen des brevets

(11) Veröffentlichungsnummer: **0 362 549**
**A2**

# (12) EUROPÄISCHE PATENTANMELDUNG

(21) Anmeldenummer: 89115880.0

(22) Anmeldetag: 29.08.89

(51) Int. Cl.5: **B65D 55/02 , B65D 43/04 , B65D 43/06**

(30) Priorität: 02.09.88 DE 8811108 U

(43) Veröffentlichungstag der Anmeldung:
**11.04.90 Patentblatt 90/15**

(84) Benannte Vertragsstaaten:
**AT BE CH DE ES FR GB GR IT LI LU NL SE**

(71) Anmelder: **Menke, Carl-Heinz**
**Westerhof**
**D-2107 Rosengarten 6(DE)**

(72) Erfinder: **Menke, Carl-Heinz**
**Westerhof**
**D-2107 Rosengarten 6(DE)**

(74) Vertreter: **Schmidt-Bogatzky, Jürgen, Dr. Ing.**
**et al**
**Schlossmühlendamm 4**
**D-2100 Hamburg 90(DE)**

(54) Verpackungsbehälter.

(57) Die Erfindung betrifft einen Verpackungsbehälter 1, insbesondere Eimer 2, mit einem wiederverwendbaren Deckel 3, der nach der Erstbefüllung des Verpackungsbehälters 1 auf dessen Füllöffnung aufgesetzt und mittels eines Verschlußgliedes 5 befestigt wird. Jedes Verschlußglied 5 ist so ausgebildet, daß dieses bei einem Erstverschluß des Verpackungsbehälters 1 mit dem Deckel 3 derart mit dem Verpackungsbehälter 1 in Wirkeingriff ist, daß eine Öffnung des Deckels 3 nur nach Zerstörung des Verschlußgliedes 5 möglich ist.

Fig. 1a

EP 0 362 549 A2

Die Erfindung betrifft einen Verpackungsbehälter, insbesondere Eimer aus Kunststoff, mit einem wiederverwendbaren Deckel, der nach der Erstbefüllung des Verpackungsbehälters auf dessen Füllöffnung aufgesetzt und mittels mindestens eines Verschlußgliedes befestigt wird.

Es ist das Bestreben, bei einer Erstbefüllung von Verpackungsbehältern wie Eimern aus Kunststoff mit Gütern die Verpackungsbehälter mit einem Deckel so zu verschließen, daß für den jeweiligen Endverbraucher optisch sichtbar ist, daß der Verpackungsbehälter noch mit dem ursprünglichen Gut befüllt ist. Hierzu ist es bekannt, z.B. Eimer und Deckel mittels zweier selbstklebender streifenförmiger Plombierfolien miteinander zu verbinden. Bei einer Öffnung des Deckels wird mindestens eine Plombierfolie zerstört. Für den Endverbraucher ist somit erkennbar, ob ein solcher Eimer vor dem Erwerb schon einmal geöffnet worden ist. Derartige Plombierstreifen werden jedoch als optisch störend empfunden, da sie häufig den äußeren optischen Eindruck des Verpackungsbehälters beeinträchtigen. Es ist ferner bekannt, nach der Befüllung eines Eimers mit der Originalware den Deckel auf diesen Behälter aufzusetzen und mittels eines um den oberen Rand des Eimers zu legenden als Verschlußglied dienenden Spannrings so fest mit dem Eimer zu verbinden, daß der Deckel in oder auf dem Eimer festgeklemmt ist. Zum Öffnen des Deckels muß der Spannring entfernt werden. Dieser Spannring ermöglicht eine Sicherung des Deckels gegen unbefugtes Öffnen, da er zum Öffnen des Deckels von dem Eimer vorher entfernt werden muß. Bei dieser Ausführungsform besteht der Nachteil, daß der Spannring verhältnismäßig teuer ist und bei Abnahme des Deckels durch den Endverbraucher ein störendes Verpackungselement darstellt.

Die Aufgabe der Erfindung besteht darin, für Verpackungsbehälter, insbesondere Eimer, mit einem wiederverwendbaren Deckel Verschlußglieder so auszubilden, daß ohne einen Spannring ein einmal vorgenommener Originalverschluß optisch leicht wahrnehmbar und leicht so entfernbar ist, daß keine sperrigen Teile des Spannrings anfallen und die Entfernung des Originalverschlusses ohne weiteres erkennbar ist.

Erfindungsgemäß erfolgt die Lösung der Aufgabe durch die kennzeichnenden Merkmale des Anspruchs 1. Nach weiteren Merkmalen der Erfindung erfolgt die Lösung der Aufgabe durch die kennzeichnenden Merkmale der Ansprüche 11 und 13.

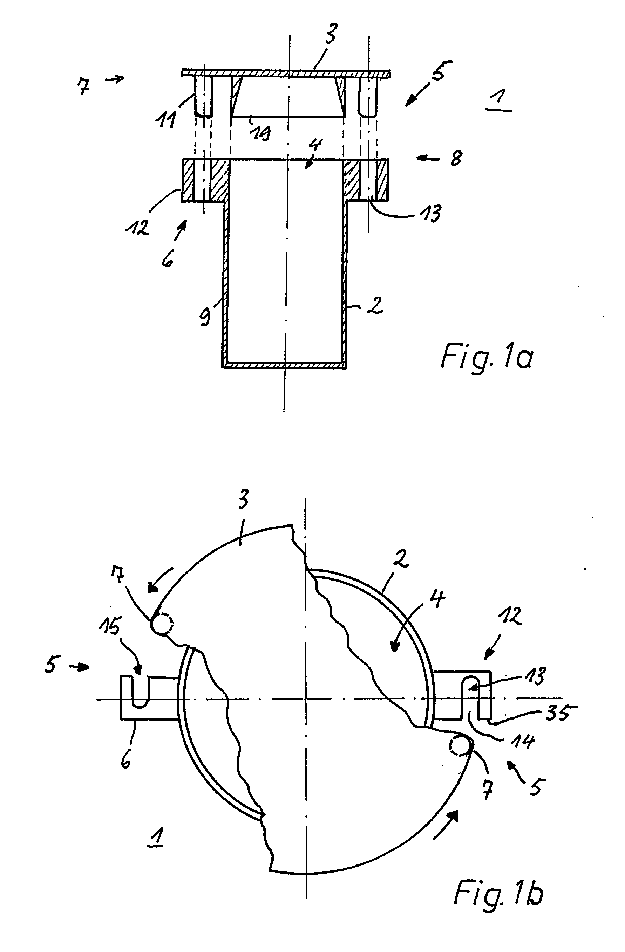

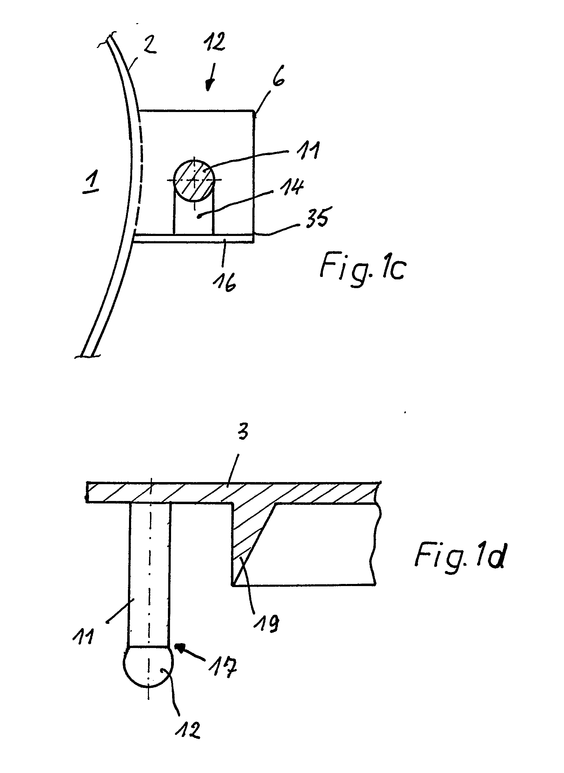

Ausgestaltungen der Erfindung werden in den abhängigen Ansprüchen beschrieben und nachstehend am Beispiel der in den Figuren 1a bis 8 dargestellten Verschlußglieder näher erläutert.

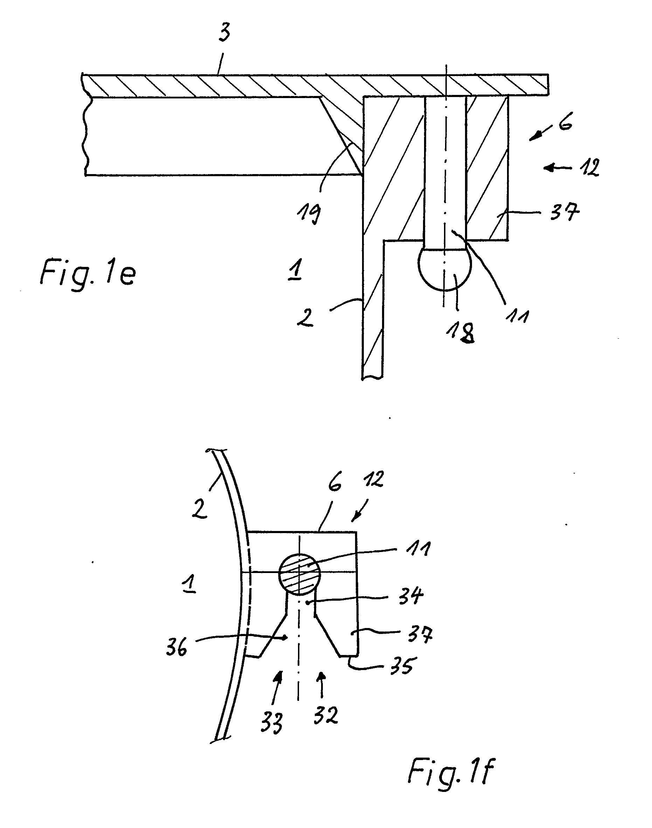

Fig. 1a bis 1f zeigt einen Verpackungsbehälter 1, bei dem der Deckel 3 bei Auflage auf einem Eimer 2 durch Drehen mittels beispielsweise eines Saugkopfes in eine Stellung gebracht wird, bei der zwei einander entgegengesetzte Verschlußglieder 5 in Wirkeingriff miteinander sind. Die Verschlußglieder 5 bestehen aus einem Haltestück 6 und einem Einschubstück 7. Die Einschubstücke 7 sind an dem Deckel 3 senkrecht zu dessen Ebene als Zapfen 11 ausgebildet. Die Haltestücke 6 sind als am oberen Randabschnitt 8 des Eimers 2 an dessen Außenwand 20 angeordnete Materialverdickungen 12 ausgebildet. In den Materialverdickungen 12 ist jeweils als Durchbrechung 13 eine schlitzförmige Ausnehmung 14 ausgebildet, die eine einseitig offene Einschuböffnung 15 aufweist. In diese Einschuböffnung 15 kann jeweils ein Zapfen 11 eingeschoben werden. In der eingeschobenen Stellung des Zapfens 11 wird die Einschuböffnung 15 mittels einer Plombierfolie 16 abgedeckt. Bei Herausdrehen des Deckels 3 zum Öffnen wird die Plombierfolie 16 zerstört. Hierdurch ist erkennbar, daß der Originalverschluß nicht mehr besteht. Um ein Öffnen des Deckels 3 ohne Zerstörung der Plombierfolie 16 zu verhindern, ist es zweckmäßig an dem freien Endabschnitt 17 eines jeden Zapfens 11 eine Materialverdickung 13 auszubilden, die als Kugel oder Quersteg ausgeformt sein kann (Fig. 1d und 1e). Hierdurch wird verhindert, daß der Deckel 3 vertikal von dem Eimer 2 abgezogen werden kann ohne das vorher die Zapfen 11 aus dem Haltestück 6 herausgeschwenkt wurden. In bekannter Weise ist an der Unterseite des Deckels 3 jeweils ein Einsteckring 19 ausgebildet, der bei auf dem Eimer 2 aufgesetzten Deckel unter Klemmwirkung an der Innenwand des Eimers 2 anliegt. Aus diesem Grunde ist ein manuelles verschwenken des Deckels 3 auf dem Eimer 2 nicht möglich, so daß hierfür besondere Vorrichtungen wie der oben bereits erwähnte Saugstempel verwendet werden müssen.

Es ist auch möglich, an die Durchbrechung 13 unter Ausbildung einer seitlich am Haltestück 6 angeordneten Einschuböffnung 32 eine Ausnehmung 33 derart auszubilden, daß an die Durchbrechung 13 zunächst ein schlitzförmiger Nutabschnitt 34 mit einer gegenüber dem Durchmesser der Durchbrechung 13 kleineren Schlitzbreite anschließt. An dessen der Durchbrechung 13 abgewandtem Endabschnitt kann dann ein sich zur Seitenwand 35 keilförmig bis zur Einschuböffnung 32 erweiternder Nutabschnitt 36 ausgebildet werden (Fig. 1f).

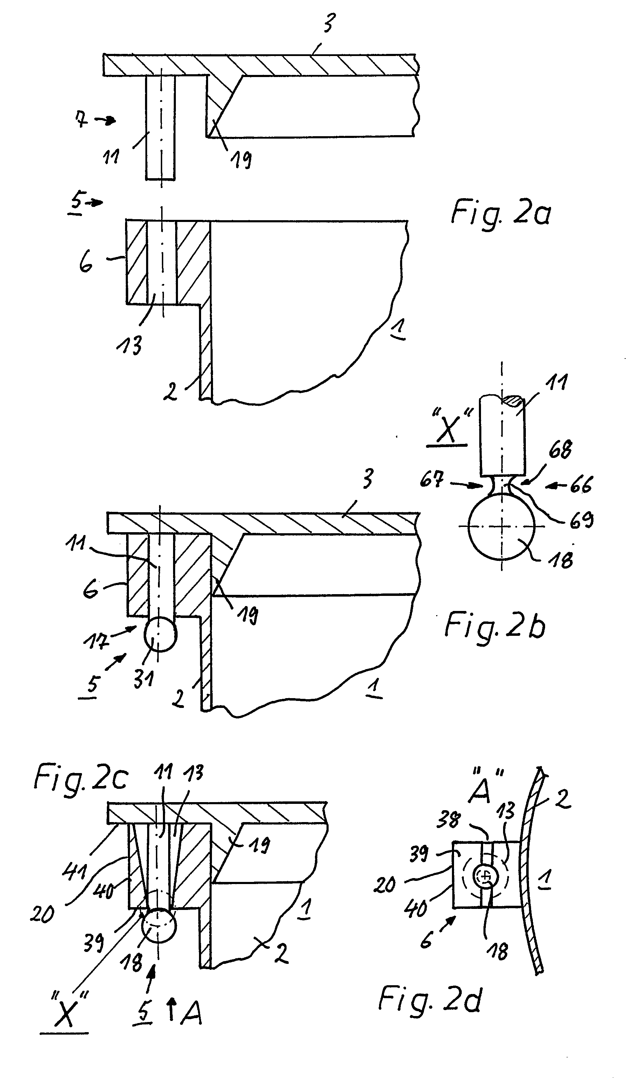

In den Figuren 2a bis 2g sind weitere Ausführungsformen von Verschlußgliedern 5 dargestellt. So ist es möglich, in den als Materialverdickungen 12 ausgebildeten Haltestücken 6 jeweils eine mittige Durchbrechung 13 vorzusehen, in die ein Zapfen 11 des Deckels 3 eingeschoben wird. Der freie Endabschnitt des Zapfens 11 wird bei aufgesetztem Deckel 3 mit einer Plombe 31 versehen. Hierdurch kann der Deckel 3 nur nach Entfernen der Plombe 31 von dem Eimer 2 abgezogen werden (Fig. 2b).

Es ist auch möglich, an den freien Endabschnitt eines jeden Zapfens 11 eine Materialverdickung 18 vorzusehen, die z.B. als Kugel, Quersteg oder als andere den Querschnitt des Zapfens 11 zumindest teilweise überragende Ausgestaltung ausgebildet sein kann. Die Materialverdickung 18 verhindert ein Abziehen des Deckels 3 von dem Eimer 2. Um in diesem Fall einen Zapfen 11 mit Materialverdickung 18 in ein Haltestück 6 einbringen zu können, muß die Durchbrechung 13 angepaßt sein. Von besonderem Vorteil ist es, wenn der Übergangsbereich 66 zwischen dem Zapfen 11 und der Materialverdickung 18 als Sollbruchstelle 67 ausgebildet ist. Eine Ausführung einer möglichen Sollbruchstelle 67 ist als Einzelheit "X" zu Fig. 2c dargestellt. In diesem Fall ist die Sollbruchstelle 67 als einen Zapfen 69 bildende Materialeinschnürung ausgebildet. Der Zapfen 69 hat einen geringeren Durchmesser als der Zapfen 11. Es ist aber auch möglich, als Sollbruchstelle 67 zwischen dem Zapfen 11 und der Materialverdickung 18 eine Perforation vorzusehen, die den Materialquerschnitt schwächt. Die Sollbruchstelle 67 dient dazu, ein leichtes Entfernen der Materialverdickung 18 von dem Zapfen 11 zu ermöglichen, um den Deckel 3 von dem Eimer 2 abheben zu können.

Hierzu kann die Durchbrechung 13 z.B. im Querschnitt konisch mit einem sich von der Deckelauflagefläche 41 zur Unterseite 39 verringernden Querschnitt ausgebildet sein. In der vertikalen Ebene der Mittelachse der Durchbrechung 13 ist in diesem Fall parallel zur Außenwand 20 des Haltestücks 6 eine zur Unterseite 39 offene schlitzförmige Ausnehmung 38 in dem Haltestück 6 unter Ausbildung eines äußeren federelastischen Flanschabschnitts 40 ausgebildet (Fig. 2c und 2d). Bei dieser Ausbildung eines Haltestücks 6 wird in die Durchbrechung 13 ein Zapfen 11 mit einer endabschnittsseitig ausgebildeten z.B. kugelförmigen Materialverdickung 18 eingeschoben. Hierbei schwenkt der Flanschabschnitt 40 zunächst nach außen, bis die Materialverdickung 18 außerhalb der Unterseite 39 des Haltestücks 6 ist. Danach federt der Flanschabschnitt 40 zurück und liegt an dem Zapfen 11 an. Sofern der Deckel 3 von dem Eimer 2 abgezogen werden soll ist es erforderlich, entweder den Zapfen 11 durchzutrennen oder aber die Materialverdickung 18 abzutrennen.

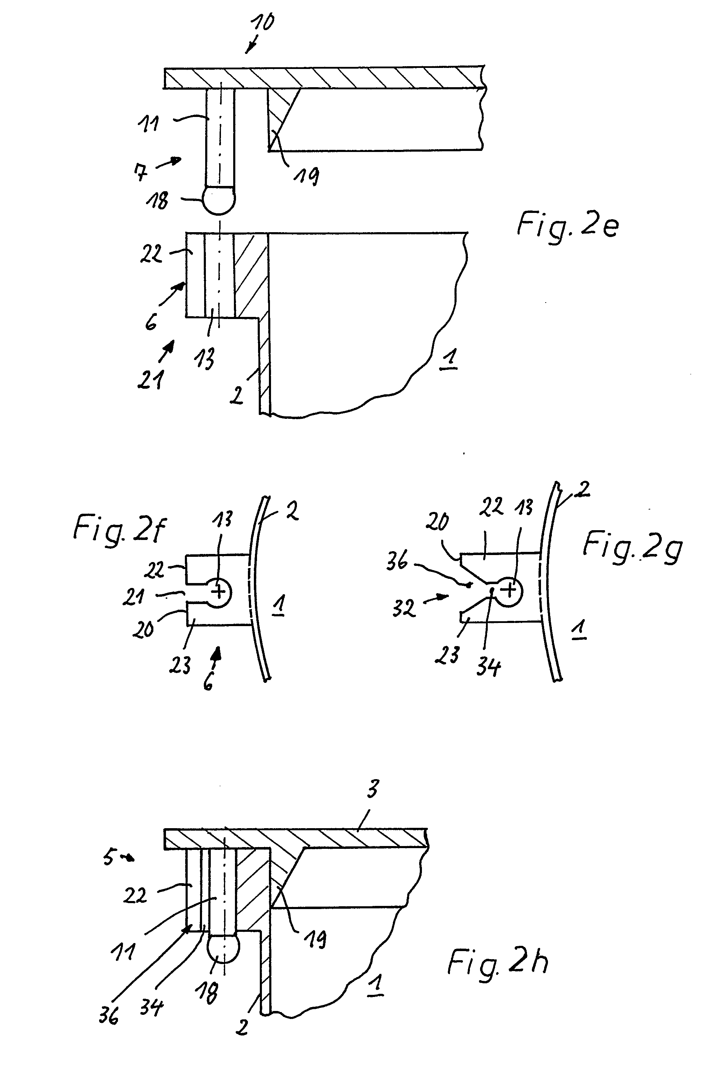

Zum Aufsetzen des Deckels 3 auf den Eimer 2 kann auch in der Außenwand 20 des Haltestücks 6 eine schlitzförmige Durchbrechung 21 ausgebildet sein (Figuren 2e und 2f), die sich bis zur Durchbrechung 13 erstreckt. Die die schlitzförmige Durchbrechung 21 begrenzenden Stege 22, 23 sind federnd elastisch ausgebildet. Hierdurch kann ein Zapfen 11 durch die schlitzförmige Durchbrechung 21 durchgeschoben werden, worauf er anschließend von den zurückfedernden Stegen 22, 23 arretiert wird.

Wie in den Figuren 2g und 2h dargestellt ist es auch möglich, an die Durchbrechung 13 radial anschließend einen schlitzförmigen Nutabschnitt 34 mit einer gegenüber dem Durchmesser der Durchbrechung 13 kleineren Schlitzbreite anzuschließen. An dessen der Durchbrechung 13 abgewandtem Endabschnitt ist ein sich zur Außenwand 20 keilförmig bis zur Einschuböffnung 32 erweiternder Nutabschnitt 36 ausgebildet. Auch in diesem Fall sind die Stege 22, 23 federnd elastisch ausgebildet und verhindern nach Einführen eines Zapfens 11 durch den Nutabschnitt 36 und den Nutabschnitt 34 ein Herausschwenken aus der Durchbrechung 13. Ein vertikales Herausziehen der Zapfen 11 wird dadurch verhindert, daß an deren freien Endabschnitten die bereits beschriebenen Materialverdickungen 18 ausgebildet sind.

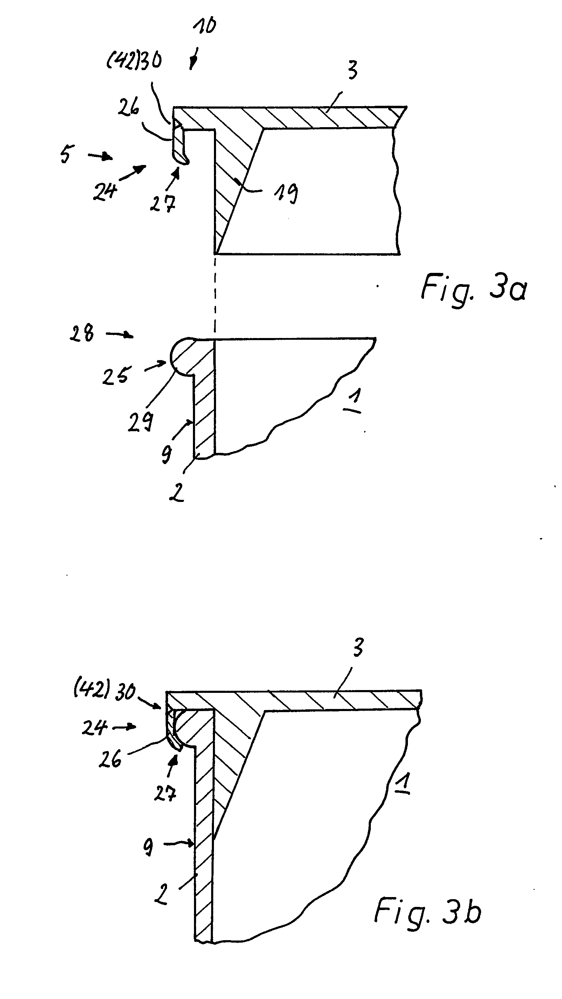

Fig. 3a und 3b zeigt eine weitere Ausgestaltung eines Verschlußgliedes 5. Diese besteht aus einem Klemmring 24 und einem Einschubring 25. Der Klemmring 24 ist an dem Deckel 3 ausgebildet und besteht aus dem Einsteckring 19 sowie einem Haltering 26. Der Haltering 26 weist endabschnittsseitig einen hakenförmigen Stegabschnitt 27 auf. An dem Öffnungsrand 28 des Eimers 2 ist an der Außenwand 9 als Einschubring 25 eine wulstförmige Materialverdickung 29 ausgebildet. Beim Aufsetzen des Deckels 3 auf den Eimer 2 gleitet der Haltering 26 über wulstförmige Materialverdickung 29 bis der hakenförmige Stegabschnitt 27 die wulstförmige Materialverdickung 29 untergreift. Der Haltering 26 ist mittels einer Trennperforation 30 mit dem Einsteckring 19 bzw. dem Deckel 3 verbunden. Zum Lösen des Deckels 3 von dem Eimer ist es erforderlich, den Haltering 26 von dem Deckel 3 bzw. dem Einsteckring 19 abzureißen. In diesem Fall ist für Dritte ersichtlich, daß der Originalverschluß nicht mehr besteht. Statt einer Trennperforation 30 kann auch eine Abreißsicke 42 vorgesehen werden.

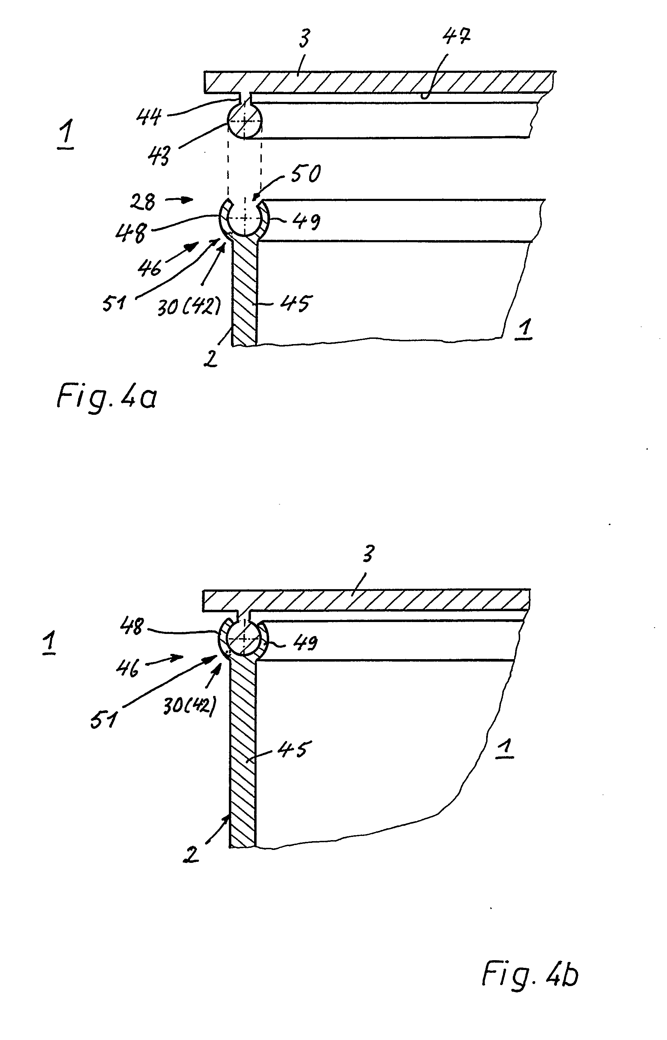

In den Figuren 4a und 4b eine weitere vorteilhafte Ausgestaltung eines Verschlußgliedes dargestellt. Dieses besteht aus einem Klemmring 46 und einem Einschubring 43. Der Einschubring 43 ist an der Deckelunterseite 47 angeordnet und mittels eines Stegs 44 mit dem Deckel 3 verbunden. Der Klemmring 46 besteht aus zwei konkav gewölbten federnd elastischen Klemmstegen 48, 49, die an Öffnungsrand 28 des Verpackungsbehälters ausgebildet sind. Sie bilden eine Ausnehmung 50, in die der Einschubring 43 bei Erstverschluß des Verpackungsbehälters 1 unter Ausbildung eines nicht zerstörungsfrei lösbaren Wirkeingriffs eingeschoben ist. Hierbei ist der Einschubring 43 von den Klemmstegen 48, 49 umklammert. Im Anschlußbereich 51 des Klemmstegs 48 an der Wand 45 des Verpackungsbehälters 1 ist eine Trennperforation 30 oder eine Abreißsicke 42 ausgebildet. Wenn beim Erstverschluß der Einschubring 43 in den Klemmring 46 eingedrückt ist, kann ein Öffnen des Deckels 3 nur dadurch erfolgen, daß der äußere Klemmsteg 48 abgezogen wird und sich im Bereich der Trennperforation 30 bzw. Abreißsicke 42 von der Wand 45 löst. Auch in diesem Fall ist somit für Dritte ersichtlich, wenn ein Originalverschluß nicht mehr besteht.

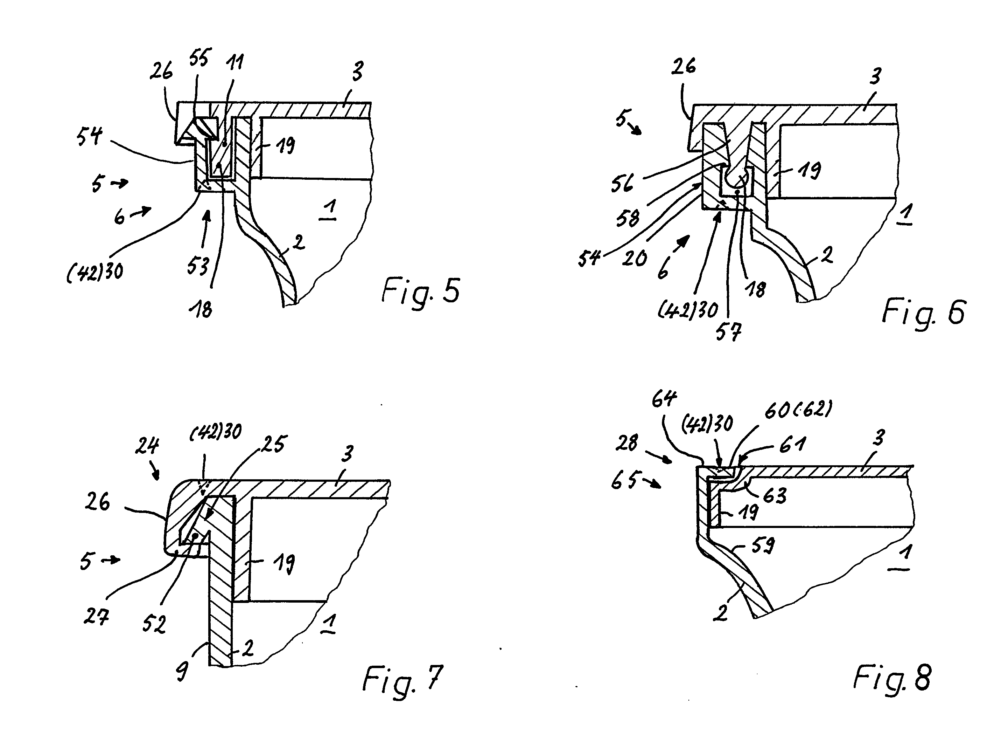

In den Figuren 5 bis 7 sind weitere mögliche Ausgestaltungen von Verschlußgliedern 5 dargestellt. So kann das Haltestück 6 als im Querschnitt L-förmiger Klemmring 53 ausgebildet sein, der am oberen Randabschnitt 8 des Eimers 2 angeformt ist. Der Endsteg 54 des Klemmrings 53 weist innenseitig einen Absatz 55 auf, der bei Erstverschluß des Verpackungsbehälters 1 von einer an dem Zapfen 11 ausgebildeten Materialverdickung 18 untergriffen ist (Fig. 5).

An dem Deckel 3 ist randseitig ein umlaufender Haltering 26 ausgebildet, der bei Verschluß des Verpackungsbehälters 1 über den Endsteg 54 geschoben ist. Der Einsteckring 19 liegt an der Innenwand des Eimers 2 an. Im unteren Bereich des Randstegs 54 ist eine Trennperforation 30 oder Abreißsicke 42 vorgesehen. Zum Öffnen des Deckels 3 ist es lediglich erforderlich, den Haltering 54 von dem Klemmring 53 abzuziehen.

Wie in Fig. 6 gezeigt, kann die Durchbrechnung 13 einen im Querschnitt konisch ausgebildeten Abschnitt 56 aufweisen, an den sich eine im Querschnitt erweiterte Ausnehmung 57 anschließt. Die Ausnehmung 57 kann zur Unterseite 39 offen oder geschlossen sein. Jeder Zapfen 11 ist ebenfalls kegelstumpfförmig ausgebildet und weist einen Kegelwinkel auf, der dem des Abschnitts 56 der Durchbrechung 13 entspricht. Bei Erstverschluß des Verpackungsbehälters 1 liegt die Materialverdickung 18 eines jeden Zapfens 11 jeweils an der Absatzfläche d58 der Ausnehmung 57 an. Ein an dem Deckel 3 randseitig ausgebildeter umlaufender Haltering 26 übergreift die Außenwand 20 eines jeden Haltestücks 6. Es ist auch möglich, statt einzelner Haltestücke 6 an dem Eimer 2 einen umlaufenden Klemmring 53 vorzusehen, der im Querschnitt die Ausbildung wie das Klemmstück 6 nach Fig. 6 hat. An dem Klemmring 53 bzw. den Haltestücken 6 ist ebenfalls eine Trennperforation 30 oder Abreißsicke 42 ausgebildet, damit der äußere Randsteg 54 zum Öffnen des Deckels 3 abgezogen werden kann.

Fig. 7 zeigt eine Variante des in den Figuren 3a und 3b dargestellten Verschlußgliedes 5. Bei dieser Ausführung ist der Einschubring 25 als am Öffnungsrand 28 des Verpackungsbehälters 1 schiefwinklig zur Außenwand 9 nach unten gerichteter Randsteg 54 ausgebildet. Der Randsteg 54 ist endabschnittsseitig von dem hakenförmigen Stegabschnitt 27 umfaßbar. Im Anschlußbereich des Halterings 26 an der horizontalen Deckelplatte ist ebenfalls eine Trennperforation 30 oder Abreißsicke 42 vorgesehen.

Eine besondere Ausgestaltung eines Verschlußglieds 65 ist in Fig. 8 schematisch dargestellt. Am Öffnungsrand 28 des Verpackungsbehälters 1 sind an dessen Innenwand 59 Halteflansche 60 angeformt, die bei Erstverschluß des Verpackungsbehälters 1 in Ausnehmungen 61 des Deckels 3 eingreifen. Hierzu ist der Einsteckring 19 mittels eines Winkelstücks 63 an dem Randabschnitt des Deckels 3 angeformt. Durch dieses Winkelstück 63 wird die Ausnehmung 61 gebildet, die zweckmäßigerweise umlaufend gestaltet wird. Es ist auch möglich, statt einzelner Halteflansche 60 einen umlaufenden Haltering 62 vorzusehen, der im Querschnitt wie die Halteflansche 60 ausgebildet ist. In der Außenfläche 64 der Halteflansche 60 bzw. des Halterings 62 ist eine Trennperforation 30 oder eine Abreißsicke 42 vorgesehen. Zum Öffnen des Deckels 3 ist es erforderlich, entweder die Halteflansche 60 oder aber den Haltering 62 im Bereich der Trennperforation 30 bzw. der Abreibsicke 42 von dem z.B. als Eimer 2 ausgebildeten Verpackungsbehälter 1 zu trennen.

**Ansprüche**

1. Verpackungsbehälter (1) insbesondere Eimer (2) mit einem wiederverwendbaren Deckel (3), der nach der Erstbefüllung des Verpackungsbehälters (1) auf dessen Füllöffnung aufgesetzt und mittels mindestens eines Verschlußgliedes (5) befestigt wird, mit einer Anordnung von mindestens zwei aus jeweils einem Haltestück (6) und einem Einschubstück (7) bestehenden Verschlußgliedern (5), wobei an mindestens zwei diametral entgegengesetzen Stellen des an die Füllöffnung (4) angrenzenden außenseitigen Randabschnitts (8) der Außenwand (9) ein Haltestück (6) angeformt und an mindestens zwei zueinander diametral entgegengesetzten Randabschnitten (10) des Deckels (3) eine Einschubstück (7) ausgebildet ist, dadurch gekennzeichnet, daß die Einschubstücke (7) als an dem Deckel (3) senkrecht zur Deckelebene angeformte Zapfen (11) und die Haltestücke (6) als an der Außenwand (9) des Verpackungsbehälters (1) angeordnete Materialverdickungen (12) ausgebildet sind, in denen jeweils eine Durchbrechung (13) ausgebildet ist und daß bei Erstverschluß des Verpackungsbehälters (1) mit dem Deckel (3) jeweils ein Einschubstück (7) in ein Haltestück (6) derart eingeführt ist, daß die Einschubstücke (7) und Haltestücke (6) der Verschlußglieder (5) in einem nicht zerstörungsfrei lösbaren Wirkeingriff sind.

2. Verpackungsbehälter nach Anspruch 1, dadurch gekennzeichnet, daß bei durch die Durchbrechungen (13) gesteckten Zapfen (11) an deren freien Endabschnitten (17) eine Plombe (31) mit einem mindestens in einer Richtung größeren Querschnitt als dem der Durchbrechungen (13) angeordnet ist.

3. Verpackungsbehälter nach Anspruch 1, dadurch gekennzeichnet, daß die Durchbrechung (13) als zu einer Seite des Haltestücks (6) einseitig offene schlitzförmige Ausnehmung (14) ausgebildet ist, deren Einschuböffnung (15) bei in die Ausnehmung (14) eingeschwenktem Zapfen (11) mit einer Plombierfolie (16) oder dergleichen verschlossen ist.

4. Verpackungsbehälter nach Anspruch 1 und 3, dadurch gekennzeichnet, daß an dem freien Endabschnitt (17) der Zapfen (11) eine Materialverdickung (18) ausgebildet ist.

5. Verpackungsbehälter nach Anspruch 4, dadurch gekennzeichnet, daß zwischen dem Zapfen (11) und der Materialverdickung (18) eine Sollbruchstelle (67) ausgebildet ist.

6. Verpackungsbehälter nach Anspruch 1 und 4, dadurch gekennzeichnet, daß an die Durchbrechung (13) unter Ausbildung einer seitlich am Haltestück (6) angeordneten Einschuböffnung (32) eine Ausnehmung (33) derart ausgebildet ist, daß an die Durchbrechung (13) ein schlitzförmiger Nutabschnitt (34) mit einer gegenüber dem Durchmesser der Durchbrechung (13) kleineren Schlitzbreite anschließt, an dessen der Durchbrechung (13) abgewandten Endabschnitt ein sich zur Seitenwand (35) keilförmig bis zur Einschuböffnung (32) erweiternder Nutabschnitt (36) ausgebildet ist.

7. Verpackungsbehälter nach Anspruch 1 und 2, dadurch gekennzeichnet, daß die Durchbrechung (13) im Querschnitt konisch mit einem sich von der Deckelauflagefläche (41) zur Unterseite (39) verringernden Querschnitt ausgebildet ist und daß in der vertikalen Ebene der Mittelachse der Durchbrechung (13) parallel zur Außenwand (20) des Haltestücks (6) eine zur Unterseite (39) offene schlitzförmige Ausnehmung (38) in dem Haltestück (6) unter Ausbildung eines äußeren federelastischen Flanschabschnitts (40) ausgebildet ist.

8. Verpackungsbehälter nach Anspruch 1 und 4, dadurch gekennzeichnet, daß in der Außenwand (20) der die Durchbrechungen (13) aufweisenden Haltestücke (6) radial eine schlitzförmige Durchbrechung (21) mit einer zum Durchmesser der Durchbrechung (13) kleinere Schlitzweite ausgebildet ist.

9. Verpackungsbehälter nach Anspruch 1, 4 und 8, dadurch gekennzeichnet, daß an die Durchbrechung (13) radial anschließend ein schlitzförmiger Nutabschnitt (34) mit einer gegenüber dem Durchmesser der Durchbrechung (13) kleineren Schlitzbreite anschließt, an dessen der Durchbrechung (13) abgewandten Endabschnitt ein sich zur Außenwand (20) keilförmig bis zur Einschuböffnung (32) erweiternder Nutabschnitt (36) ausgebildet ist.

10. Verpackungsbehälter nach Anspruch 8 und 9, dadurch gekennzeichnet, daß die die schlitzförmigen Durchbrechungen (21) begrenzenden Stege (22, 23) der Haltestücke (6) federnd elastisch ausgebildet sind.

11. Verpackungsbehälter insbesondere Eimer mit einem wiederverwendbaren Deckel, der nach der Erstbefüllung des Verpackungsbehälters auf dessen Füllöffnung aufgesetzt und mittels mindestens eines Verschlußgliedes befestigt wird, gekennzeichnet dadurch, daß das Verschlußglied (5) aus einem Klemmring (24) und einem Einschubring (25) besteht, wobei der Klemmring (24) allgemein senkrecht zur Deckelebene angeordnet und am Randabschnitt (10) des Deckels (3) ausgebildet ist und aus einem inneren Einsteckring (19) und einem äußeren Haltering (26) besteht, der federnd elastisch ausgebildet und zur lösbaren Verbindung mit dem Deckel (3) bzw. Einsteckring (19) mit einer Trennperforation (30) oder einer Abweißsicke (42) versehen ist und endabschnittsseitig einen hakenförmig gebogenen Stegabschnitt (27) aufweist und der Einschubring (25) als an dem Öffnungsrand (28) des Ver packungsbehälters (1) angeordnete umlaufende wulstförmige Materialverdickung (29) ausgebildet ist, die bei Erstverschluß des Verpackungsbehälters (1) unter Ausbildung eines nicht zerstörungsfrei lösbaren Wirkeingriffs von dem hakenförmig gebogenen Stegabschnitt (27) des Klemmrings (24) untergriffen ist.

12. Verpackungsbehälter nach Anspruch 10, dadurch gekennzeichnet, daß der Einschubring (25) als am Öffnungsrand (28) des Verpackungsbehälters (1) schiefwinklig zur Außenwand (9) nach unten gerichteter Randsteg (54) ausgebildet ist, der endabschnittsseitig von dem hakenförmigen Stegabschnitt (27) des Halterings (26) umfaßbar ist.

13. Verpackungsbehälter insbesondere Eimer mit einem wiederverwendbaren Deckel, der nach der Erstbefüllung des Verpackungsbehälters auf dessen Füllöffnung aufge setzt und mittels mindestens eines Verschlußgliedes befestigt wird, gekennzeichnet dadurch, daß das Verschlußglied (5) aus einem Klemmring (46) und einem Einschubring (43) besteht, wobei der Einschubring (43) an der Deckelunterseite (47) angeordnet ist und der Klemmring (46) aus zwei konkav gewölbten federnd elastischen Klemmstegen (48, 49) besteht, die am Öffnungsgrand (28) des Verpackungsbehälters (1) ausgebil det sind und eine Ausnehmung (50) bilden, in die der Einschubring (43) bei Erstverschluß des Verpackungsbehälters (1) unter Ausbildung eines nicht zerstörungsfrei lösbaren Wirkeingriffs von den Klemmstegen (48, 49) umklammert eingeschoben ist, wobei im Anschlußbereich (51) des Klemmstegs (48) an der Wand (45) des Verpackungsbehälters (1) eine Trennperforation (30) oder eine Abreißsicke (42) ausgebildet ist.

14. Verpackungsbehälter nach Anspruchd 13, dadurch gekennzeichnet, daß der Einschubring (43) mittels eines Stegs (44) mit dem Deckel (3) verbunden ist.

15. Verpackungsbehälter nach Anspruch 1 und 4, dadurch gekennzeichnet, daß das Haltestück (6) als im Querschnitt L-förmiger am oberen Randabschnitt (8) des Eimers (2) angeformter Klemmring (53) ausgebildet ist, an dessen Endsteg (54) innenseitig ein Absatz (55) angeformt ist, der bei Erstverschluß des Verpackungsbehälters (1) von einer an dem Zapfen (11) ausgebildeten Maaterialverdikkung (18) untergriffen ist, wobei ein an dem Deckel (3) randseitig ausgebildeter umlaufender Haltering (26) über den Endsteg (54) geschoben ist.

16. Verpackungsbehälter nach Anspruch 1, dadurch gekennzeichnet, daß die Durchbrechung (13) einen im Querschnitt konisch ausgebildeten Abschnitt (56) mit einem sich von der Deckelauflagefläche (41) nach unten verringernden Querschnitt aufweist, an den sich eine im Querschnitt erweiternde zur Unterseite (39) der Materialverdickung (12 offene oder geschlossene Ausnehmung (57) anschließt und daß jeder Zapfen (11) kegelstumpfförmig mit einem dem Abschnitt (56) entsprechenden Kegelwinkel und einer endabschnittsseitigen Materialverdickung (18) ausgebildet ist, wobei bei Erstverschluß des Verpackungsbehälters (1) die Materialverdickungen (18) der Zapfen (11) jeweils an der Absatzfläche (58) der Ausnehmung (57) anliegen und ein an dem Deckel (3) randseitig ausgebildeter umlaufender Haltering die Außenwand (20) eines jeden Haltestücks (6) übergreift.

17. Verpackungsbehälter nach Anspruch 15 und 16, dadurch gekennzeichnet, daß das Haltestück (6) als umlaufender Klemmring (53) ausgebildet ist.

18. Verpackungsbehälter nach Anspruch 15 bis 17, dadurch gekennzeichnet, daß an dem Klemmring (53) bzw. Haltestück (6) eine Trennperforation (30) oder Abreißsicke (42) ausgebildet ist.

19. Verpackungsbehälter insbesondere mit einem wiederverwendbaren Deckel, der nach der Erstbefüllung des Verpackungsbehälters auf dessen Füllöffnung aufgesetzt und mittels mindestens eines Verschlußgliedes befestigt wird, dadurch gekennzeichnet, daß das Verschlußglied (65) aus am Öffnungsrand (28) des Verpackungsbehälters (1) an dessen Innenwand (59) angeformten Halteflanschen (60) besteht, die bei Erstverschluß des Verpackungsbehälters (1) in eine Ausnehmung (61) des Deckels (3) eingreifen, dessen randseitiger Einsteckring (19) unter den Halteflanschen (60) an der Innenwand (59) anliegt.

20. Verpackungsbehälter nach Anspruch 19, dadurch gekennzeichnet, daß die Halteflansche (60) zu einem umlaufenden Haltering (62) ausgebildet sind.

21. Verpackungsbehälter nach Anspruch 19 und 20, dadurch gekennzeichnet, daß in der Außenfläche (64) der Halteflansche (60) bzw. des Halterings (62) eine Trennperforation (30) oder eine Abreißsicke (42) ausgebildet ist.

*Fig. 1a*

*Fig. 1b*

Fig. 1c

Fig. 1d

Fig. 1e

Fig. 1f

Fig. 2a

Fig. 2b

Fig. 2c

Fig. 2d

Fig. 2e

Fig. 2f

Fig. 2g

Fig. 2h

Fig. 3a

Fig. 3b

Fig. 4a

Fig. 4b

Fig. 5

Fig. 6

Fig. 7

Fig. 8